# EUROPEAN PATENT SPECIFICATION

(11) **EP 3 699 878 B1**
(45) Date of publication and mention of the grant of the patent: **30.07.2025**
(21) Application number: 20153347.8
(22) Date of filing: 23.01.2020
(51) Int. Cl.: G07G 1/00, G06Q 20/20, G06K 17/00, G06K 7/10, G06V 10/141, G06V 30/224

(54) **ARTICLE INFORMATION READING APPARATUS**
VORRICHTUNG ZUM LESEN VON ARTIKELINFORMATIONEN
APPAREIL DE LECTURE D'INFORMATIONS D'ARTICLES

(30) Priority: 20.02.2019 JP 2019028118
(43) Date of publication of application: 26.08.2020
(73) Proprietor: Toshiba TEC Kabushiki Kaisha, Shinagawa-ku Tokyo 141-8562 (JP)
(72) Inventor: Naito, Hidehiro, Tokyo, 141-8562 (JP)
(74) Representative: Hoffmann Eitle

(56) References cited:
- CN-A- 102 201 121
- CN-A- 106 846 670
- JP-A- H06 187 480
- US-A- 5 546 475
- US-A1- 2008 110 992
- US-A1- 2011 147 454
- US-A1- 2016 140 534
- US-A1- 2016 342 970
- US-A1- 2018 307 881

## Description

### FIELD

Embodiments described herein relate generally to an article information reading apparatus and methods related thereto.

### BACKGROUND

There has been a self-checkout terminal that enables self-checkout by a customer. In such a self-checkout terminal, for example, an example in which the self-checkout terminal is started if a customer is detected by an infrared sensor has been proposed.

However, since a new sensor needs to be set in the self-checkout terminal in the past, there have been problems such as securing of a setting space, an increase in the number of components, an increase in cost, and the like.

US 20110147454 A1 relates to a self-checkout terminal including a reading unit and a light emitting unit. The reading unit reads commodity information from a commodity held over a reading position. The light emitting unit emits light in a first color to illuminate the reading position and emits light in a second color in response to the reading of the commodity information by the reading unit.

US 2018/307881 A1 relates to a reading device including an image capturing device, a light emitting device, and a processor. The processor controls the image capturing device to capture an image of an image capturing area. When the reading device is in a standby mode, the processor determines, based on the captured image, whether an object is in the image capturing area.

US 2016/140534 A1 relates to an information processing apparatus comprising an image capturing module configured to photograph an object held over an image capturing section; a first recognition module configured to compare a feature amount of the object photo-graphed by the image capturing module with a feature amount for collation of each of commodities pre-stored in a dictionary to obtain a similarity degree therebetween and recognize, from different commodities, a commodity matching with the object through the similarity degree; a display control module configured to display, on a first screen, a first input section corresponding to the commodity recognized by the first recognition module and a second input section corresponding to commodities in advance; an input module configured to receive the selection on the first or second input section displayed by the display control module; and a registration module configured to sales-register the commodity corresponding to the first or second input section received by the input module.

### SUMMARY OF THE INVENTION

One of the objects of the present invention is to improve prior art techniques and overcome at least some of the prior art problems as for instance above illustrated.

The object of the invention is achieved by the subject-matter of the independent claims. Advantageous embodiments are defined in the dependent claims. Further examples are provided for facilitating the understanding of the invention.

According to a first aspect of the present disclosure, it is provided an article information reading apparatus, comprising a reader configured to read, from an image captured by an imaging section, a code symbol attached to an article; a detector configured to detect a change in brightness from the image captured by the imaging section; and a reading controller configured to start operation of the reader on condition that the detector detects the change in the brightness.

Optionally, the apparatus according to the first aspect of the invention further comprises an illumination controller configured to control, based on an operation state of the reader and an operation state of the detector, brightness of an illuminating section that illuminates an imaging range of the imaging section.

Optionally, in the apparatus according to the first aspect of the invention, on condition that the reader does not read the code symbol for a first predetermined time, the reading controller ends operation of the reader, and the illumination controller changes an illumination state of the illuminating section from a first illumination state in which the illuminating section is emitting light at maximum brightness to a second illumination state in which the brightness of the illuminating section is reduced.

Optionally, in the apparatus according to the first aspect of the invention, the illuminating section comprises a light emitting diode.

Optionally, in the apparatus according to the first aspect of the invention, after changing the illumination state of the illuminating section to the second illumination state, the illumination controller changes, on condition that brightness of the image captured by the imaging section is a first predetermined value or more for a second predetermined time, the illumination state of the illuminating section to a third illumination state in which the illuminating section is extinguished.

Optionally, in the apparatus according to the first aspect of the invention, if the illumination state of the illuminating section is the second illumination state or the third illumination state, on condition that the detector detects a change in brightness from the image captured by the imaging section, the reading controller starts the operation of the reader, and the illumination controller changes the illumination state of the illuminating section to the first illumination state.

Optionally, in the apparatus according to the first aspect of the invention, if the illumination state of the illumination controller is the third illumination state, the illumination controller changes the illumination state of the illuminating section to the second illumination state on condition that the brightness of the image captured by the imaging section is smaller than a second predetermined value for a third predetermined time.

According to a second aspect of the present disclosure, it is comprised a self-checkout terminal, comprising a loading stand for accommodating articles; a payment processing section; and
an article information reading apparatus, comprising a reader configured to read, from an image captured by an imaging section, a code symbol attached to an article; a detector configured to detect a change in brightness from the image captured by the imaging section; and a reading controller configured to start operation of the reader on condition that the detector detects the change in the brightness.

Optionally, the self-checkout terminal according to the second aspect of the invention further comprises an illumination controller configured to control, based on an operation state of the reader and an operation state of the detector, brightness of an illuminating section that illuminates an imaging range of the imaging section.

Optionally, in the self-checkout terminal according to the second aspect of the invention, on condition that the reader does not read the code symbol for a first predetermined time, the reading controller ends operation of the reader, and the illumination controller changes an illumination state of the illuminating section from a first illumination state in which the illuminating section is emitting light at maximum brightness to a second illumination state in which the brightness of the illuminating section is reduced.

Optionally, in the self-checkout terminal according to the second aspect of the invention, the illuminating section comprises a light emitting diode.

Optionally, in the self-checkout terminal according to the second aspect of the invention, after changing the illumination state of the illuminating section to the second illumination state, the illumination controller changes, on condition that brightness of the image captured by the imaging section is a first predetermined value or more for a second predetermined time, the illumination state of the illuminating section to a third illumination state in which the illuminating section is extinguished.

Optionally, in the self-checkout terminal according to the second aspect of the invention, if the illumination state of the illuminating section is the second illumination state or the third illumination state, on condition that the detector detects a change in brightness from the image captured by the imaging section, the reading controller starts the operation of the reader, and the illumination controller changes the illumination state of the illuminating section to the first illumination state.

Optionally, in the self-checkout terminal according to the second aspect of the invention, if the illumination state of the illumination controller is the third illumination state, the illumination controller changes the illumination state of the illuminating section to the second illumination state on condition that the brightness of the image captured by the imaging section is smaller than a second predetermined value for a third predetermined time.

According to a third aspect of the present disclosure, it is provided an article information reading method, comprising reading, from an image captured by an imaging section, a code symbol attached to an article; detecting a change in brightness from the image captured by the imaging section; and starting reading on condition that the change in the brightness is detected.

Optionally, the method according to the third aspect of the invention further comprises controlling, based on an operation state of the reading and an operation state of the detecting, brightness of an illuminating section that illuminates an imaging range of the imaging section.

Optionally, the method according to the third aspect of the invention further comprises on condition that reading does not read the code symbol for a first predetermined time, ending the reading, and changing an illumination state of the illuminating section from a first illumination state in which the illuminating section is emitting light at maximum brightness to a second illumination state in which the brightness of the illuminating section is reduced.

Optionally, the method according to the third aspect of the invention further comprises after changing the illumination state to the second illumination state, changing, on condition that brightness of the image captured by the imaging section is a first predetermined value or more for a second predetermined time, the illumination state of the illuminating section to a third illumination state in which the illuminating section is extinguished.

Optionally, the method according to the third aspect of the invention further comprises if the illumination state of the illuminating section is the second illumination state or the third illumination state, on condition that a change in brightness from the image captured by the imaging section is detected, starting the reading, and changing the illumination state of the illuminating section to the first illumination state.

Optionally, the method according to the third aspect of the invention further comprises if the illumination state is the third illumination state, changing the illumination state of the illuminating section to the second illumination state on condition that the brightness of the image captured by the imaging section is smaller than a second predetermined value for a third predetermined time.

### DESCRIPTION OF THE DRAWINGS

FIG. 1 is a perspective view illustrating an example of an exterior of a self-POS terminal according to an embodiment;
FIG. 2 is an example of an exterior view and a sectional view of a scanner incorporated in the self-POS terminal;
FIG. 3 is a hardware block diagram illustrating an example of a hardware configuration of the self-POS terminal;
FIG. 4 is a functional block diagram illustrating an example of a functional configuration of the self-POS terminal;
FIG. 5 is a diagram for explaining customer detection processing;
FIG. 6 is a state transition chart illustrating an example of transition of an operation state of the scanner;
FIG. 7 is a flowchart illustrating a flow of processing performed by the self-POS terminal; and
FIG. 8 is a flowchart illustrating an example of a flow of processing performed by the scanner incorporated in the self-POS terminal.

### DETAILED DESCRIPTION

An embodiment provides an article information reading apparatus capable of implementing, without changing a hardware configuration of the self-checkout terminal in the past, a function of detecting approach of a customer.

An article information reading apparatus in an embodiment includes a reading section, a detecting section, and a reading control section. The reading section reads, from an image captured by an imaging section, a code symbol attached to an article. The detecting section detects a change in brightness from the image captured by the imaging section. The reading control section starts operation of the reading section on condition that the detecting section detects the change in the brightness. An article information reading method involves reading, from an image captured by an imaging section, a code symbol attached to an article; detecting a change in brightness from the image captured by the imaging section; and starting reading on condition that the change in the brightness is detected.

### First Embodiment

A self-POS terminal according to a first embodiment is explained below with reference to the drawings. This embodiment is an example in which an article information reading apparatus is applied to a self-POS terminal provided in a retail store such as a convenience store or a supermarket, a customer settling purchased commodities by himself or herself using the self-POS terminal. In the embodiment explained below, a commodity is an example of an article. The present invention is not limited by the embodiment explained below.

### Explanation of an overall configuration of the self-POS terminal

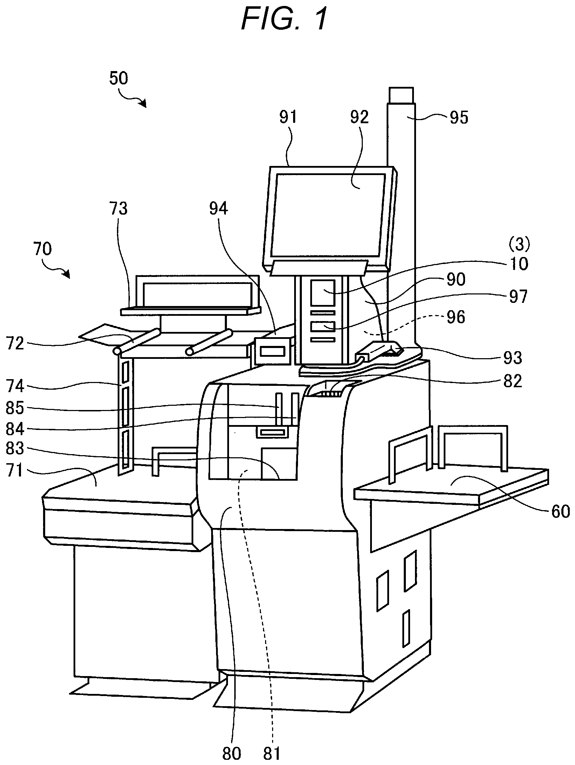

First, an overall configuration of the self-POS terminal is explained. FIG. 1 is a perspective view illustrating an example of an exterior of the self-POS terminal according to the embodiment. A self-POS terminal 50 is an apparatus with which a customer himself or herself acts as an operator and performs registration and accounting of commodities. The self-POS terminal 50 is called self-checkout apparatus as well.

The self-POS terminal 50 is a terminal for the customer to register, by himself or herself, commodities to be purchased and perform accounting. The self-POS terminal 50 includes a first loading stand 60 provided on the front right side, a second loading stand 70 provided on the front left side, and a first housing 80 provided in the front center.

The customer who uses the self-POS terminal 50 places, on the first loading stand 60, a basket or the like including commodities to be purchased. The customer places, on the second loading table 70, a bag in which registered commodities are put. The customer registers, using an apparatus placed on the first housing 80, the commodities taken out from the basket. The customer puts the registered commodities in the bag placed on the second loading stand 70. The customer performs the registration on the respective commodities collected in the basket. If the registration of the respective commodities is completed, the customer performs accounting processing of the registered commodities using an apparatus included in the first housing 80. According to such a procedure, the customer performs registration processing and the accounting processing of the commodities to be purchased.

More in detail, the second loading stand 70 includes a pedestal 71, a bag hanging hook 72, and a temporary placing stand 73. The bag hanging hook 72 and the temporary placing stand 73 are supported by a column 74 provided on the pedestal 71 and are provided above the pedestal 71. The pedestal 71 is a stand on which a commodity or the like unsuitable to be put in a bag such as a commodity larger than the bag is placed. The bag handing hook 72 is a hook for hanging a bag in which registered commodities are put. The temporary placing stand 73 is a stand on which commodities requiring attention for packing such as fragile commodities are temporarily placed.

The first housing 80 includes, on the inside, a depositing and dispensing section 81 that executes depositing and dispensing of coins, bills, and the like. Further, the housing 80 includes a coin depositing port 82, a coin dispensing port 83, a bill depositing port 84, and a bill dispensing port 85. The coin depositing port 82 is a depositing port for coins deposited in the depositing and dispensing section 81 as a price of a commodity by the customer. The coin dispensing port 83 is a dispensing port for coins dispensed from the depositing and dispensing section 81 as change. The bill depositing port 84 is a depositing port for bills deposited in the depositing and dispensing section 81 as a price of a commodity by the customer. The bill dispensing port 85 is a dispensing port for bills dispensed from the depositing and dispensing section 81 as change. Balances (or quantities) of bills and coins stored by the depositing and dispensing section 81 are counted for each of denominations by a publicly-known technique.

The self-POS terminal 50 includes, on the upper surface of the first housing 80, a second housing 90, a display section 91, a handy scanner 93, a card reader writer 94, and a warning lamp 95.

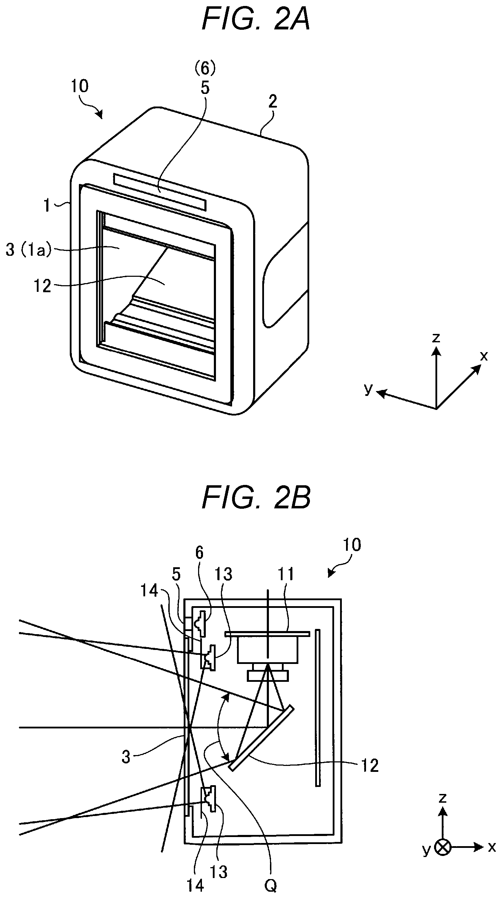

The second housing 90 includes, on the inside, a scanner 10 (see FIG. 2) and a receipt printer 96. The scanner 10 reads a code symbol (for example, a barcode) given to a commodity held over a reading window 3. The scanner 10 is an example of an article information reading apparatus. The structure and the function of the scanner 10 are explained in detail below.

The second housing 90 includes a receipt issue port 97 that discharges a receipt or the like output by the receipt printer 96. The receipt printer 96 discharges, from the receipt issue port 97, a receipt formed by printing sales information of commodities subjected to transaction processing on paper.

The second housing 90 supports the display section 91 provided above the second housing 90. The display section 91 is, for example, a liquid crystal display. The display section 91 displays, for example, commodity information of registered commodities. Further, the display section 91 displays a guidance screen for informing the customer of an operation method of the self-POS terminal 50, a total amount of commodities, a deposit amount, a change amount, and the like and displays, for example, a settlement screen for selecting a payment method.

The display section 91 includes a touch panel 92 for operating the self-POS terminal 50. The touch panel 92 detects a part operated (touched) on the display section 91 and determines that an operation request corresponding to display content displayed in the part where the display section 91 is operated is performed.

The handy scanner 93 is a hand-held scanner. The handy scanner 93 is used if it may be difficult to hold a barcode or the like attached to a commodity over the reading window 3 of the scanner 10, for example, if the commodity is heavy or the commodity is large.

The card reader writer 94 executes reading and writing of information concerning electronic settlement from and in a storage medium such as a card medium used for the electronic settlement such as a credit card or an electronic money.

The warning lamp 95 flashes in, for example, red to thereby notify a store clerk that an abnormality occurs in the self-POS terminal 50. The warning lamp 95 notifies the store clerk that the customer operates the self-POS terminal 50 by mistake.

### Explanation of the structure of the scanner

The structure of the scanner 10 is explained with reference to FIG. 2. FIG. 2 is an example of an exterior view and a sectional view of the scanner 10 incorporated in the self-POS terminal 50. For explanation, a coordinate system xyz illustrated in FIG. 2 is set. As illustrated in FIG. 1, the scanner 10 is used in a state in which the scanner 10 is embedded in the second housing 90.

As illustrated in FIG. 2A, the scanner 10 has a substantially rectangular parallelepiped shape formed by locking a front cover 1 and a rear cover 2. The reading window 3 is set in an opening section 1a on the front surface of the front cover 1. The customer holds a commodity over the reading window 3 to thereby cause the scanner 10 to read a code symbol attached to the commodity.

A light emitting section 5, an LED (Light Emitting Diode) for notification 6, a camera 11, a mirror 12, an LED for illumination 13, and a diffusion plate 14 illustrated in FIG. 2B are set on the inside of the reading window 3 (the opening section 1a). FIG. 2B is an xz sectional view of the scanner 10.

The light emitting section 5 notifies an operation state of the scanner 10 to the customer using a light emission pattern (a light emission color or a lighting state) of the LED for notification 6.

The camera 11 includes an image sensor such as a CCD (Charge Coupled Device) or a CMOS (Complementary Metal-Oxide Semiconductor) and an optical system such as a lens. The camera 11 images a region on the inner side of an imaging range Q through the reading window 3. The camera 11 is an example of an imaging section.

The mirror 12 changes an imaging direction of the camera 11 to the direction of the reading window 3.

The LED for illumination 13 irradiates illumination light on the imaging range Q. The LED for illumination 13 is configured by, for example, a white LED. The LED for illumination 13 is an example of an illuminating section. As illustrated in FIG. 2B, a plurality of LEDs for illumination 13 are set. However, the number of the LEDs for illumination 13 is determined as appropriate based on an output and a radiation angle, breadth of the imaging range Q, and the like of an LED in use.

The diffusion plate 14 diffuses the illumination light radiated by the LED for illumination 13. Consequently, since diffused light is irradiated on the imaging range Q, luminance unevenness of the illumination light is reduced and uniform illumination can be performed. A shadow of an object is eased. This contributes to acquisition of an image that is easily recognized.

### Explanation of a hardware configuration of the self-POS terminal

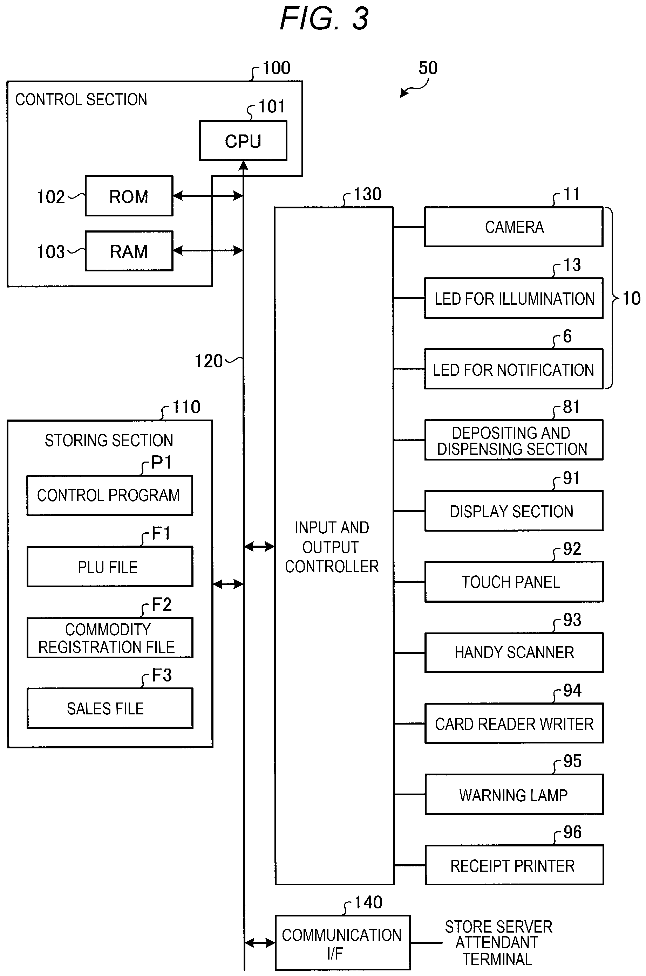

Hardware of the self-POS terminal 50 is explained. FIG. 3 is a hardware block diagram illustrating an example of a hardware configuration of the self-POS terminal 50. The self-POS terminal 50 includes a control section 100, a storing section 110, an input and output controller 130, and a communication I/F (Interface) 140.

The control section 100 includes a CPU (Central Processing Unit) 101, a ROM (Read Only Memory) 102, and a RAM (Random Access Memory) 103. The CPU 101 is connected to the ROM 102 and the RAM 103 via a bus line 120. The CPU 101 develops, in the RAM 103, a control program P1 stored in the ROM 102 or the storing section 110. The CPU 101 operates according to the control program P1 developed in the RAM 103 to control the operation of the self-POS terminal 50. That is, the control section 100 has the configuration of a general computer.

The control section 100 is connected to the storing section 110, the input and output controller 130, and the communication I/F 140 via the bus line 120.

The storing section 110 is a nonvolatile memory such as a flash memory in which stored information is retained even if a self-POS terminal 50 is turned off, a HDD (Hard Disk Drive), or the like. The control section 110 stores, for example, programs including the control program P1. The control program P1 is a program for causing the self-POS terminal 50 to exert functions of the self-POS terminal 50.

The control program P1 may be provided while being incorporated in the ROM 102 in advance. The control program P1 may be provided while being recorded in a computer-readable recording medium such as a CD-ROM, a flexible disk (FD), a CD-R, or a DVD (Digital Versatile Disc) as a file of a form installable in the control section 100 or an executable form. Further, the control program P1 may be provided by being stored on a computer connected to a network such as the Internet and downloaded through the network. The control program P1 may be provided or distributed through a network such as the Internet.

The storing section 110 stores a PLU (Price Look-Up) file F1, a commodity registration file F2, and a sales file F3. The PLU file F1 is a master file in which commodity information (commodity codes, commodity names, prices, and the like) of commodities sold in the store is stored. Since the commodities sold in the store change every day, the self-POS terminal 50 acquires the latest PLU file F1 from a not-illustrated store server using the communication I/F 140.

The commodity registration file F2 is a file in which commodity information (commodity names, prices, and the like) of commodities purchased by the customer acquired from the PLU file F1 is stored based on commodity registration operation by the customer.

The input and output controller 130 is connected to the scanner 10 (the camera 11, the LED for illumination 13, and the LED for notification 6), the depositing and dispensing section 81, the display section 91, the touch panel 92, the handy scanner 93, the card reader writer 94, the warning lamp 95, and the receipt printer 96 illustrated in FIG. 3. The input and output controller 130 controls, based on a command from the control section 100, the operation of the various kinds of hardware connected to the input and output controller 130. Explanation of the functions of the respective kinds of hardware is omitted because the functions are explained above.

The communication I/F 140 mutually performs communication with the store server, an attendant terminal, and the like not illustrated in the figures. The attendant terminal is a terminal that manages operation states and the like of a plurality of self-POS terminals 50 provided in the store.

### Explanation of a functional configuration of the self-POS terminal

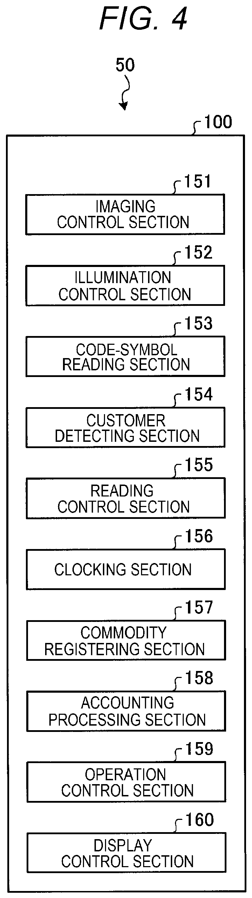

A functional configuration of the self-POS terminal 50 is explained with reference to FIG. 4. FIG. 4 is a functional block diagram illustrating an example of the functional configuration of the self-POS terminal 50. The control section 100 of the self-POS terminal 50 develops the control program P1 in the RAM 103 and operates the control program P1 to thereby realize, as functional sections, an imaging control section 151, an illumination control section 152, a code-symbol reading section 153, a customer detecting section 154, a reading control section 155, a clocking section 156, a commodity registering section 157, an accounting processing section 158, an operation control section 159, and a display control section 160.

The imaging control section 151 controls the operation of the camera 11 to thereby cause the camera 11 to image the outside of the self-POS terminal 50 through the reading window 3. The imaging control section 151 acquires an image captured by the camera 11.

The illumination control section 152 controls, based on an operation state of the code-symbol reading section 153 and an operation state of the customer detecting section 154, brightness of the LED for illumination 13 (illuminating section) that illuminates an imaging range of the camera 11. The illumination control section 152 is an example of an illumination control section.

Specifically, the illumination control section 152 changes, on condition that the code-symbol reading section 153 does not read a code symbol for a first predetermined time, an illumination state of the LED for illumination 13 from a first illumination state in which the LED for illumination 13 is emitting light at the maximum brightness to a second illumination state in which brightness of the LED for illumination 13 is reduced.

After changing the illumination state of the LED for illumination 13 to the second illumination state, the illumination control section 152 changes, on condition that brightness of the image captured by the camera 11 is equal to or larger than a first predetermined value for a second predetermined time, the illumination state of the LED for illumination 13 to a third illumination state in which the LED for illumination 13 is extinguished.

If the illumination state of the LED for illumination 13 is the second illumination state or the third illumination state, the illumination control section 152 changes the illumination state of the LED for illumination 13 to the first illumination state on condition that the customer detecting section 154 detects a change in the brightness from the image captured by the camera 11.

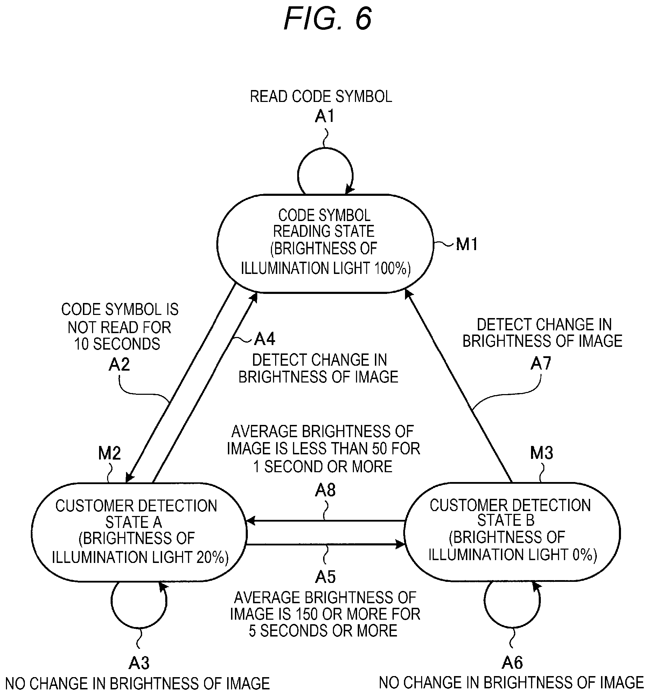

If the illumination state of the LED for illumination 13 is the third illumination state, the illumination control section 152 changes the illumination state of the LED for illumination 13 to the second illumination state on condition that the brightness of the image captured by the camera 11 is smaller than the second predetermined value for a third predetermined time. A function of the illumination control section 152 is explained in detail below (FIG. 6).

The code-symbol reading section 153 reads a code symbol attached to the commodity from the image captured by the camera 11. The code-symbol reading section 153 is an example of a reading section.

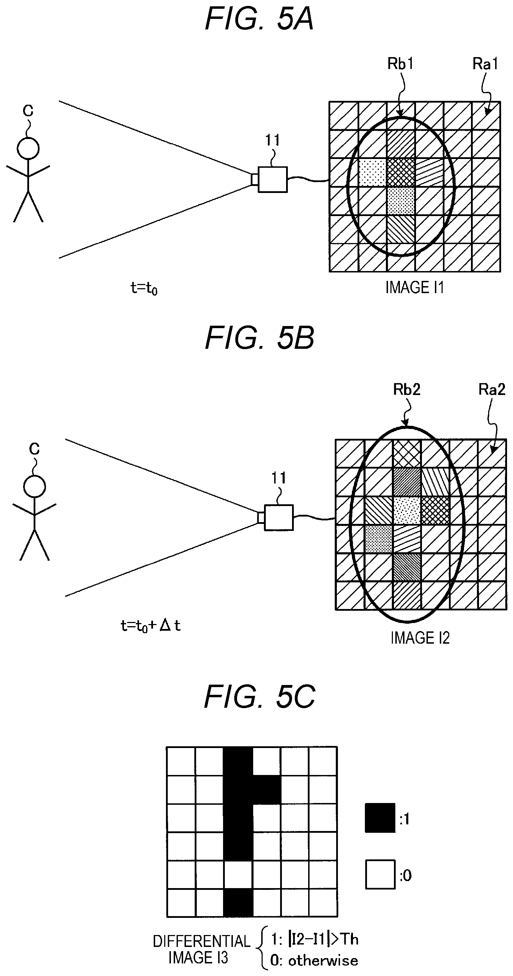

The customer detecting section 154 detects a change in the brightness from the image captured by the camera 11. By detecting the change in the brightness, the customer detecting section 154 performs customer detection processing for detecting a customer approaching the self-POS terminal 50. The customer detecting section 154 calculates average brightness of the image captured by the camera 11, that is, an average of pixel values of all pixels. The customer detecting section 154 is an example of a detecting section. A function of the customer detecting section 154 is explained in detail below (FIG. 5).

The reading control section 155 starts the operation of the code-symbol reading section 153 on condition that the customer detecting section 154 detects a change in the brightness. The reading control section 155 ends the operation of the code-symbol reading section 153 on condition that the code-symbol reading section 153 does not read the code symbol for the first predetermined time. The reading control section 155 is an example of a reading control section.

In order to control the operation of the illumination control section 152, the clocking section 156 clocks elapsed times after occurrence of various events such as execution of imaging by the camera 11 and calculation of average brightness of an image. The clocking by the clocking section 156 is explained in detail below (FIG. 6).

The commodity registering section 157 reads out commodity information from the PLU file F1 based on the code symbol read by the code-symbol reading section 153 and executes commodity registration processing for registering the read-out commodity information in the commodity registration file F2.

The accounting processing section 158 performs accounting processing based on content registered in the commodity registration file F2. Specifically, for example, if settlement is performed by cash, the accounting processing section 158 dispenses, if there is change, the change based on an amount of money (bills and coins) deposited by the customer and a total amount of commodities and issues, from the receipt printer 96, a receipt on which commodity information and settlement information (a total amount, a deposit amount, a change amount, and the like) of commodities subjected to the commodity registration processing are printed.

The operation control section 159 detects operation of the self-POS terminal 50 by the customer.

The display control section 160 displays, on the display section 91 or the like, information corresponding to an operation state of the self-POS terminal 50.

### Explanation of the customer detection processing

The customer detection processing performed by the customer detecting section 154 is explained with reference to FIG. 5. FIG. 5 is a diagram for explaining the customer detection processing.

FIG. 5A illustrates an example of an image I1 captured by the camera 11 at time t=t0 if a customer C is present in a position far from the self-POS terminal 50. The image I1 captured at this time indicates a distribution of brightness of a region on the inner side of an imaging range Q including the customer C.

A main use of the camera 11 incorporated in the scanner 10 is to read a code symbol of a commodity held over the reading window 3. Therefore, a focus position of the camera 11 is adjusted to a position near the reading window 3. Therefore, if an image including the customer C present in a position far apart from the reading window 3 is captured, the captured image I1 is blurred. That is, a contour of the customer C, that is, a human shape cannot be recognized in the image I1. However, since, in general, a contrast difference is present between a background and the customer C, the image I1 is an image visualizing a contract difference between a region indicating the background and a region indicating the customer C.

In order to realize efficiency of image processing, the customer detecting section 154 divides an image captured by the camera 11 into a plurality of blocks. The image I1 illustrated in FIG. 5A is an example in which an image captured by the camera 11 is divided into longitudinal and lateral 6×6 blocks.

The customer detecting section 154 calculates an average of pixel values (brightness) of a plurality of pixels belonging to each of the divided blocks and sets the average as a pixel value (brightness) of the pertinent block. Consequently, in the image I1, it is possible to visualize a difference in brightness between a region Ra1 corresponding to the background and a region Rb1 corresponding to the customer C, although a shape indicating the customer C cannot be recognized.

FIG. 5B illustrates an example of an image I2 captured by the camera 11 at time t=t0+Δt. Information stored in the image I2 is the same as the image I1 explained above. At this time, it is assumed that the customer C moves toward the camera 11, that is, the self-POS terminal 50.

Since the region having the difference in brightness between the customer C and the background moves according to the movement of the customer C, a region Ra2 corresponding to the background and a region Rb2 corresponding to the customer C included in the image I2 are regions different in shapes and brightness from the region Ra1 corresponding to the background and the region Rb1 corresponding to the customer C included in the image I1.

FIG. 5C is an example of a differential image I3 indicating a result obtained by deducting the image I2 from the image I1 (I1-I2). The differential image I3 is a binary image obtained by binarizing a differential result with a predetermined threshold Th. That is, in the differential image I3, "1" is stored in a block of |I2-I1|>Th. On the other hand, in the differential image I3, "0" is stored in a block of |I2-I1|≤Th.

The customer detecting section 154 detects that a change in brightness occurs if there are a predetermined number or more of blocks in which "1" is stored in the differential image I3. The customer detecting section 154 determines that the customer C is approaching the self-POS terminal 50.

The customer detecting section 154 repeatedly executes the series of processing explained above to thereby generate the differential image I3 at a time interval of Δt. The customer detecting section 154 determines, at the time interval of Δt, whether the customer C is approaching the self-POS terminal 50.

The customer detecting section 154 may calculate an apparent movement vector (an optical flow) from the region Rb1 in the image I1 and the region Rb2 in the image I2 and determine whether the region where the brightness changes is moving in a direction approaching the scanner 10. By performing such processing, it is possible to more accurately detect the approach of the customer C.

### Explanation of a state transition of the scanner

Transition of an operation state of the scanner 10 is explained with reference to FIG. 6. FIG. 6 is a state transition diagram illustrating an example the transition of the operation state of the scanner 10.

A state in which the code-symbol reading section 153 of the scanner 10 is reading a code symbol is represented as a state M1. In the state M1, the customer detecting section 154 stops the customer detection processing. In the state M1, the illumination control section 152 lights the LED for illumination 13 at the maximum brightness (maximizes a forward direction current If of the LED for illumination 13). This state is a first illumination state.

In the state M1, if the code-symbol reading section 153 reads a code symbol, the scanner 10 retains the state M1 (Arc A1).

On the other hand, in the state M1, if the code-symbol reading section 153 does not read a code symbol for a first predetermined time (for example, ten seconds), the scanner 10 shifts to a customer detection state A (Arc A2).

The customer detection state A is a state in which the customer detecting section 154 is performing the customer detection processing. This state is represented as a state M2. In the state M2, the code-symbol reading section 153 stops reading processing of a code symbol. In the state M2, the illumination control section 152 lights the LED for illumination 13 at 20% of the maximum brightness (sets the forward direction current If of the LED for illumination 13 to 20% of the maximum value). This state is a second illumination state.

In the state M2, if a change in brightness is not detected in an image captured by the camera 11, the scanner 10 retains the state M2 (Arc A3).

On the other hand, in the state M2, if a change in brightness is detected in the image captured by the camera 11, the scanner 10 shifts to the state M1 (Arc A4).

In the state M2, if average brightness of the image captured by the camera 11 is a first predetermined value (for example, a pixel value 150 in an 8-bit gradation image) or more for a second predetermined time (for example, five seconds), the scanner 10 shifts to a customer detection state B (Arc A5) .

The customer detection state B is a state in which the customer detecting section 154 is performing the customer detection processing. This state is represented as a state M3. In the state M3, the code-symbol reading section 153 stops the reading processing of a code symbol. In the state M3, the illumination control section 152 extinguishes the LED for illumination 13 (sets the forward direction current If of the LED for illumination 13 to 0). This state is a third illumination state.

In the state M3, if a change in brightness is not detected in the image captured by the camera 11, the scanner 10 retains the state M3 (Arc A6).

On the other hand, in the state M3, if a change in brightness is detected in the image captured by the camera 11, the scanner 10 shifts to the state M1 (Arc A7).

In the state M3, if the average brightness of the image captured by the camera 11 is smaller than a second predetermined value (for example, a pixel value 50 in an 8-bit gradation image) for a third predetermined time (for example, one second), the scanner 10 shifts to the customer detection state A (Arc A8) .

Various setting values (the first predetermined time, the second predetermined time, the third predetermined time, the first predetermined value, the second predetermined value, and the forward direction current If of the LED for illumination 13) illustrated in FIG. 6 are examples and only have to be set as appropriate based on an evaluation experiment or the like.

Explanation of a flow of processing performed by the self-POS terminal

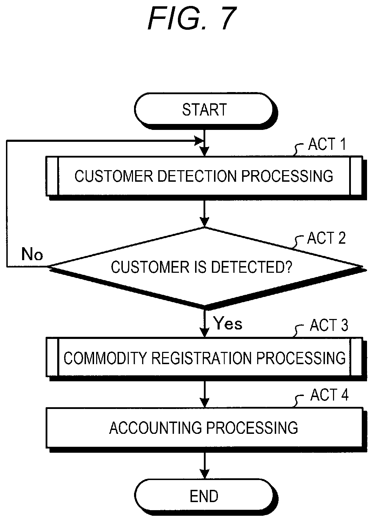

A flow of overall processing performed by the self-POS terminal 50 is explained with reference to FIG. 7. FIG. 7 is a flowchart illustrating an example of a flow of processing performed by the self-POS terminal 50 according to the embodiment.

The customer detecting section 154 performs customer detection processing for detecting a customer (Act 1)

Further, the customer detecting section 154 determines, based on a result of the customer detection processing, whether the customer is approaching the self-POS terminal 50 (Act 2). If the customer detecting section 154 determines that the customer is approaching the self-POS terminal 50 (Yes in Act 2), the processing proceeds to Act 3. On the other hand, if the customer detecting section 154 does not determine that the customer is approaching the self-POS terminal 50 (No in Act 2), the processing returns to Act 1.

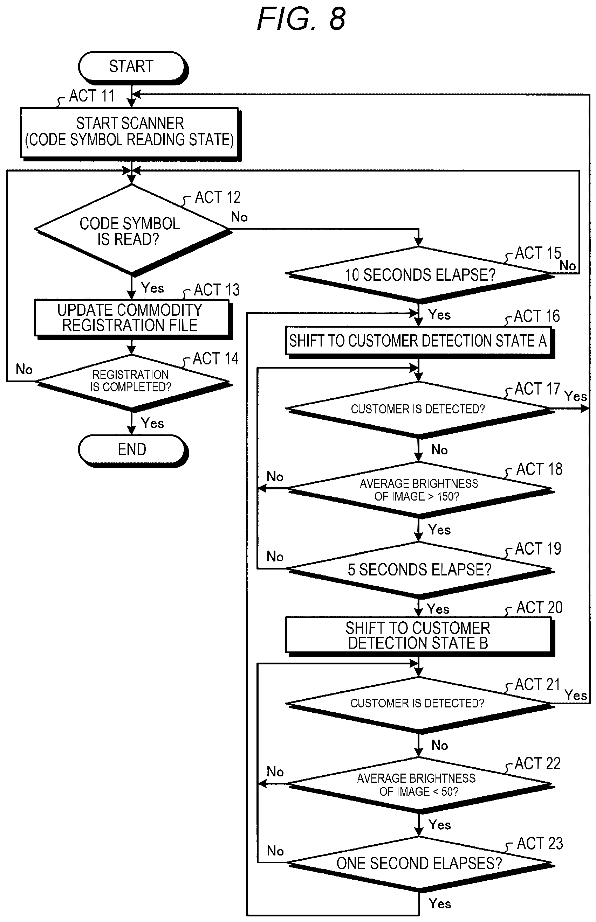

If the customer detecting section 154 determines Yes in Act 2, the commodity registering section 157 reads a code symbol and performs commodity registration processing for registering a commodity indicated by the read code symbol (Act 3). In FIG. 7, the respective kinds of processing in Acts 1, **2,** and 3 are simplified. A detailed flow of these kinds of processing is explained below (FIG. 8).

Subsequently, the accounting processing section 158 performs accounting processing for accounting the commodity registered by the commodity registration processing (Act 4). Thereafter, the self-POS terminal 50 ends the processing illustrated in FIG. 7.

Explanation of a flow of processing performed by the scanner

A flow of processing performed by the scanner 10 is explained in detail with reference to FIG. 8. FIG. 8 is a flowchart illustrating an example of a flow of processing performed by the scanner 10 incorporated in the self-POS terminal 50 according to the embodiment. The flowchart of FIG. 8 illustrates a flow of the respective kinds of processing in Acts 1, 2, and 3 in FIG. 7 in detail.

The reading control section 155 starts the scanner 10 and causes the code-symbol reading section 153 to read a code symbol (Act 11). This state is equivalent to the state M1 illustrated in FIG. 6. At this time, the illumination control section 152 changes the illumination state of the LED for illumination 13 to the first illumination state.

The reading control section 155 determines whether the code-symbol reading section 153 reads a code symbol (Act 12). If the reading control section 155 determines that the code-symbol reading section 153 reads a code symbol (Yes in Act 12), the processing proceeds to Act 13. On the other hand, if the reading control section 155 does not determine that the code-symbol reading section 153 reads a code symbol (No in Act 12), the processing proceeds to Act 15.

If the reading control section 155 determines Yes in Act 12, the commodity registering section 157 additionally registers the code symbol of the commodity read in Act 12 in the commodity registration file F2 to thereby update the commodity registration file F2 (Act 13).

The commodity registering section 157 determines whether registration of all commodities is completed (Act 14) . If the commodity registering section 157 determines that the registration of all the commodities is completed (Yes in Act 14), the scanner 10 ends the processing illustrated in FIG. 8. On the other hand, if the commodity registering section 157 does not determine that the registration of all the commodities is completed (No in Act 14), the processing returns to Act 12.

On the other hand, if the reading control section 155 determines No in Act 12, the clocking section 156 determines whether ten seconds (the first predetermined time) elapse after the code-symbol reading section 153 reads the code symbol (Act 15). If the clocking section 156 determines that ten seconds elapse (Yes in Act 15), the processing proceeds to Act 16. On the other hand, if the clocking section 156 does not determine that ten seconds elapse (No in Act 15), the processing returns to Act 12.

If the clocking section 156 determines Yes in Act 15, the illumination control section 152 and the reading control section 155 shift the scanner 10 to the customer detection state A (the state M2 illustrated in FIG. 6) (Act 16). At this time, the reading control section 155 stops the operation of the code-symbol reading section 153. The illumination control section 152 changes the illumination state of the LED for illumination 13 to the second illumination state.

Subsequently, the customer detecting section 154 determines whether the customer is detected (Act 17). If the customer detecting section 154 detects that the customer is detected (Yes in Act 17), the processing returns to Act 11. On the other hand, if the customer detecting section 154 does not determine that the customer is detected (No in Act 17), the processing proceeds to Act 18.

If the customer detecting section 154 determines No in Act 17, the customer detecting section 154 determines whether the average brightness of the image captured by the camera 11 is higher than 150 (the first predetermined value) (Act 18). If the customer detecting section 154 determines that the average brightness of the image is higher than 150 (Yes in Act 18), the processing proceeds to Act 19. On the other hand, if the customer detecting section 154 does not determine that the average brightness of the image is higher than 150 (No in Act 18), the processing returns to Act 17.

If the customer detecting section 154 determines Yes in Act 18, the clocking section 156 determines whether five seconds (the second predetermined time) elapse after the customer detecting section 154 determines that the average brightness of the image is higher than 150 (Act 19). If the clocking section 156 determines that five seconds elapse (Yes in Act 19), the processing proceeds to Act 20. On the other hand, if the clocking section 156 does not determine that five seconds elapse (No in Act 19), the processing returns to Act 17.

If the clocking section 156 determines Yes in Act 19, the illumination control section 152 and the reading control section 155 shift the scanner 10 to the customer detection state B (the state M3 illustrated in FIG. 6) (Act 20). At this time, the reading control section 155 stops the operation of the code-symbol reading section 153. The illumination control section 152 extinguishes the LED for illumination 13 (the third illumination state).

Subsequently, the customer detecting section 154 determines whether the customer is detected (Act 21). If the customer detecting section 154 determines that the customer is detected (Yes in Act 21), the processing returns to Act 11. On the other hand, if the customer detecting section 154 does not determine that the customer is detected (No in Act 21), the processing proceeds to Act 22.

If the customer detecting section 154 determines No in Act 21, the customer detecting section 154 determines whether the average brightness of the image captured by the camera 11 is smaller than 50 (the second predetermined value) (Act 22). If the customer detecting section 154 determines that the average brightness of the image is smaller than 50 (Yes in Act 22), the processing proceeds to Act 23. On the other hand, if the customer detecting section 154 does not determine that the average brightness of the image is smaller than 50 (No in Act 22), the processing returns to Act 21.

If the customer detecting section 154 determines Yes in Act 22, the clocking section 156 determines whether one second (the third predetermined time) elapses after the customer detecting section 154 determines that the average brightness of the image is smaller than 50 (Act 23). If the clocking section 156 determines that one second elapses (Yes in Act 23), the processing proceeds to Act 16. On the other hand, if the clocking section 156 does not determine that one second elapses (No in Act 23), the processing returns to Act 21.

As explained above, in the scanner 10 (the article information reading apparatus) in the first embodiment, the code-symbol reading section 153 (reading section) reads the code symbol attached to the commodity (an article) using the image captured by the camera 11 (imaging section). The customer detecting section 154 (detecting section) detects a change in brightness using the image captured by the camera 11 to thereby detect approach of the customer to the self-POS terminal 50. The reading control section 155 (reading control section) starts the operation of the code-symbol reading section 153 on condition that the customer detecting section 154 detects a change in brightness. Therefore, both of the reading of the code symbol and the detection of the customer can be executed using the image captured by the same camera 11. Therefore, it is possible to implement the function of detecting the approach of the customer without changing the hardware configuration of the scanner in the past.

In the scanner 10 (the article information reading apparatus) in the first embodiment, the illumination control section 152 (illumination control section) controls, based on the operation state of the code-symbol reading section 153 (the reading section) and the operation state of the customer detecting section 154 (the detecting section), the brightness of the LED for illumination 13 (the illuminating section) that illuminates the imaging range of the camera 11 (the imaging section). Therefore, it is possible to reduce power consumption of the scanner 10 by changing brightness of illumination according to ambient brightness.

In the scanner 10 (the article information reading apparatus) in the first embodiment, the reading control section 155 (the reading control section) ends the operation of the code-symbol reading section 153 (the reading section) on condition that the code-symbol reading section 153 (the reading section) does not read a code symbol for the first predetermined time. The illumination control section 152 (the illumination control section) changes the illumination state of the LED for illumination 13 (the illuminating section) from the first illumination state in which the LED for illumination 13 is emitting light at the maximum brightness to the second illumination state in which the brightness is reduced. Therefore, if performing the customer detection processing, it is possible to reduce the power consumption of the scanner 10 by stopping the operation of the scanner 10 and reducing the brightness of the illumination.

After the illumination control section 152 (the illumination control section) changes the illumination state of the LED for illumination 13 (the illuminating section) to the second illumination state, the scanner 10 (the article information reading apparatus) in the first embodiment changes, on condition that the brightness of the image captured by the camera 11 (the imaging section) is the first predetermined value or more for the second predetermined time, the illumination state to the third state in which the LED for illumination 13 is extinguished. Therefore, if performing the customer detection processing, if the background is bright, the customer detecting section 154 (the detecting section) performs the customer detection processing in a state in which the LED for illumination 13 is extinguished. Consequently, it is possible to further reduce the power consumption of the scanner 10.

In the scanner 10 (the article information reading apparatus) in the first embodiment, if the illumination state of the LED for illumination 13 (the illuminating section) is the second illumination state or the third illumination state, the reading control section 155 (the reading control section) causes the code-symbol reading section 153 (the reading section) to start operation on condition that the customer detecting section 154 (the detecting section) detects a change in brightness from the image captured by the camera 11 (the imaging section). The illumination control section 152 (the illumination control section) changes the illumination state of the LED for illumination 13 (the illuminating section) to the first illumination state. Therefore, since the scanner 10 starts operation if the customer is detected, it is possible to start the scanner 10 without delay if the customer uses the self-POS terminal 50.

In the scanner 10 (the article information reading apparatus) in the first embodiment, if the illumination state of the LED for illumination 13 (the illuminating section) is the third illumination state, the illumination control section 152 changes the illumination state of the LED for illumination 13 (the illuminating section) to the second illumination state on condition that the brightness of the image captured by the camera 11 (the imaging section) is smaller than the second predetermined value for the third predetermined time. Therefore, it is possible to stably perform the customer detection processing irrespective of fluctuation in brightness by changing, according to the brightness of the background, the brightness of illumination in performing the customer detection processing.

The embodiments are explained above.

For example, the scanner 10 in the embodiment detects approach of the customer and transitions the operation state. However, the scanner 10 may be applied to a general facing-type POS terminal. That is, the customer detecting section 154 may detect approach of the store clerk to the scanner 10 to thereby transition the operation state of the scanner 10.

The scanner 10 may capture an image of a commodity not attached with a code symbol and recognize the imaged commodity through general object recognition processing. The scanner 10 may concurrently use the code symbol reading processing and the general object recognition processing. That is, first, the scanner 10 recognizes whether a code symbol is attached to a commodity held over the reading window 3. If a code symbol is attached, the scanner 10 may read the code symbol. If a code symbol is not attached, the scanner 10 may perform recognition of the commodity by general object recognition.

## Claims

1. An article information reading apparatus (10), comprising:
a reader (153) configured to read, from an image captured by an imaging section (11), a code symbol attached to an article;
**characterized by** further comprising:
a customer detecting section (154) configured to perform customer detection processing for determining if a customer is approaching the article information reading apparatus (10),
wherein the customer detection processing includes:
capturing by the imaging section (11) a first image and after a time interval (Δt) a second image (I2),
dividing each of the captured images into a plurality of blocks,
calculating an average pixel brightness of a plurality of pixels belonging to each of the plurality of blocks and setting the calculated average as a brightness of the corresponding block,
generating after the time interval (Δt) a differential image by deducting from the brightness of each block of the first image the brightness of each block of the second image, binarizing the result with a predetermined threshold and setting the corresponding block of the differential image to "one" or "zero" according to the result of the binarization, and
if there are a predetermined number or more of blocks set to "one" in the differential image determining that the customer is approaching the article information reading apparatus (10), and
a reading controller (155) configured to start operation of the reader (153) on condition that the customer detecting section (154) has determined that the customer is approaching the article information reading apparatus (10).

2. The article information reading apparatus (10) according to claim 1, further comprising an illumination controller (152) configured to control, based on an operation state of the reader (153) and an operation state of the customer detecting section (154), the brightness of an illuminating section (13) that illuminates an imaging range of the imaging section (11).

3. The article information reading apparatus (10) according to claim 2, wherein
on condition that the reader (153) does not read the code symbol for a first predetermined time,
the reading controller (155) ends the operation of the reader (153), and
the illumination controller (152) changes the illumination state of the illuminating section (13) from a first illumination state, in which the illuminating section (13) is emitting light at maximum brightness, to a second illumination state, in which the brightness of the illuminating section (13) is reduced.

4. The article information reading apparatus (10) according to claim 2 or 3, wherein the illuminating section (13) comprises a light emitting diode.

5. The article information reading apparatus (10) according to claim 3 or 4, wherein, after changing the illumination state of the illuminating section (13) to the second illumination state, the illumination controller (152) changes, on condition that brightness of the image captured by the imaging section (11) is equal to or larger than a first predetermined value for a second predetermined time, the illumination state of the illuminating section (13) to a third illumination state, in which the illuminating section (13) is extinguished.

6. The article information reading apparatus (10) according to claim 5, wherein,
if the illumination state of the illuminating section (13) is the second illumination state or the third illumination state,
on condition that the customer detecting section (154) has determined that the customer is approaching the article information reading apparatus (10), the reading controller (155) starts the operation of the reader (153), and the illumination controller (152) changes the illumination state of the illuminating section (13) to the first illumination state.

7. The article information reading apparatus (10) according to claim 5 or 6, wherein if the illumination state of the illumination section (13) is the third illumination state,
the illumination controller (152) changes the illumination state of the illuminating section (13) to the second illumination state on condition that the brightness of the image captured by the imaging section (11) is smaller than a second predetermined value for a third predetermined time.

8. A self-checkout terminal, comprising:
a loading stand for accommodating articles;
a payment processing section; and
an article information reading apparatus (10) according to one of claims 1 to 7.

9. An article information reading method performed by an article information reading apparatus (10), comprising:
reading, by a reader (153) of the apparatus, from an image captured by an imaging section (11), a code symbol attached to an article;
**characterized by** further comprising the steps of:
performing, by a customer detecting section (154) of the article information reading apparatus 10, customer detection processing for determining if a customer is approaching the article information reading apparatus (10),
wherein performing the customer detection processing includes:
capturing by the imaging section (11) a first image and after a time interval (Δt) a second image,
dividing each of the captured images into a plurality of blocks,
calculating an average pixel brightness of a plurality of pixels belonging to each of the plurality of blocks and setting the calculated average as a brightness of the corresponding block,
generating after the time interval (Δt) a differential image by deducting from the brightness of each block of the first image the brightness of each block of the second image, binarizing the result with a predetermined threshold and setting the corresponding block of the differential image to "one" or "zero" according to the result of the binarization, and
if there are a predetermined number or more of blocks set to "one" in the differential image determining that the customer is approaching the article information reading apparatus (10), starting, by a reading controller (155) of the article information reading apparatus (10), operation of the reader (153) on condition that the customer detecting section (154) has determined that the customer is approaching the article information reading apparatus (10).

10. The method according to claim 9, further comprising:
controlling, by an illumination controller (152) of the article information reading apparatus (10), based on an operation state of the reading and an operation state of the customer detection section, the brightness of an illuminating section (13) that illuminates an imaging range of the imaging section (11) .

11. The method according to claim 10, further comprising:
on condition that reading does not read the code symbol for a first predetermined time, ending the reading, and
changing an illumination state of the illuminating section (13) from a first illumination state, in which the illuminating section is emitting light at maximum brightness, to a second illumination state, in which the brightness of the illuminating section (13) is reduced.

## Patentansprüche

1. Vorrichtung (10) zum Lesen von Artikelinformationen, umfassend:
ein Lesegerät (153), das dazu konfiguriert ist, aus einem Bild, das von einem Bildgebungsabschnitt (11) aufgenommen wurde, ein an einem Artikel angebrachtes Codesymbol zu lesen;
**gekennzeichnet, durch** weiter umfassend:
einen Kundenerfassungsabschnitt (154), der dazu konfiguriert ist, eine Kundenerfassungsverarbeitung durchzuführen, um zu bestimmen, ob sich ein Kunde der Vorrichtung (10) zum Lesen von Artikelinformationen nähert,
wobei die Kundenerfassungsverarbeitung einschließt:
Aufnehmen eines ersten Bildes und nach einem Zeitintervall (Δt) eines zweiten Bildes (12) durch den Bildgebungsabschnitt (11),
Aufteilen jedes der erfassten Bilder in eine Vielzahl von Blöcken,
Berechnen einer durchschnittlichen Pixelhelligkeit einer Vielzahl von Pixeln, die zu jedem der Vielzahl von Blöcken gehören, und Setzen des berechneten Durchschnitts als eine Helligkeit des entsprechenden Blocks,
Erzeugen eines Differenzbildes nach dem Zeitintervall (Δt) durch Subtrahieren der Helligkeit jedes Blocks des ersten Bildes von der Helligkeit jedes Blocks des zweiten Bildes, Binarisieren des Ergebnisses mit einem vorbestimmten Schwellenwert und Setzen des entsprechenden Blocks des Differenzbildes entsprechend dem Ergebnis der Binarisierung auf "Eins" oder "Null", und,
wenn es eine vorbestimmte Anzahl oder mehr von den Blöcken gibt, die in dem Differenzbild auf "eins" gesetzt sind, Bestimmen, dass sich der Kunde der Vorrichtung (10) zum Lesen von Artikelinformationen nähert, und
eine Lesesteuereinheit (155), die dazu konfiguriert ist, den Betrieb des Lesegeräts (153) unter der Bedingung zu starten, dass der Kundenerfassungsabschnitt (154) bestimmt hat, dass sich der Kunde der Vorrichtung (10) zum Lesen von Artikelinformationen nähert.

2. Vorrichtung (10) zum Lesen von Artikelinformationen nach Anspruch 1, weiter umfassend eine Beleuchtungssteuereinheit (152), die dazu konfiguriert ist, basierend auf einem Betriebsstatus des Lesegeräts (153) und einem Betriebsstatus des Kundenerfassungsabschnitts (154) die Helligkeit eines Beleuchtungsabschnitts (13) zu steuern, der einen Bildgebungsbereich des Bildgebungsabschnitts (11) beleuchtet.

3. Vorrichtung (10) zum Lesen von Artikelinformationen nach Anspruch 2, wobei
unter der Bedingung, dass das Lesegerät (153) das Codesymbol für eine erste vorbestimmte Zeit nicht liest,
die Lesesteuereinheit (155) den Betrieb des Lesegeräts (153) beendet, und
die Beleuchtungssteuereinheit (152) den Beleuchtungsstatus des Beleuchtungsabschnitts (13) von einem ersten Beleuchtungsstatus, in dem der Beleuchtungsabschnitt (13) Licht bei maximaler Helligkeit emittiert, zu einem zweiten Beleuchtungsstatus, in dem die Helligkeit des Beleuchtungsabschnitts (13) reduziert ist, ändert.

4. Vorrichtung (10) zum Lesen von Artikelinformationen nach Anspruch 2 oder 3, wobei der Beleuchtungsabschnitt (13) eine Leuchtdiode umfasst.

5. Vorrichtung (10) zum Lesen von Artikelinformationen nach Anspruch 3 oder 4, wobei, nach dem Ändern des Beleuchtungsstatus des Beleuchtungsabschnitts (13) zu dem zweiten Beleuchtungsstatus,
unter der Bedingung, dass die Helligkeit des durch den Bildgebungsabschnitt (11) aufgenommenen Bildes für eine zweite vorbestimmte Zeit gleich oder größer als ein erster vorbestimmter Wert ist, die Beleuchtungssteuereinheit (152) den Beleuchtungszustand des Beleuchtungsabschnitts (13) zu einem dritten Beleuchtungszustand ändert, in dem der Beleuchtungsabschnitt (13) ausgeschaltet ist.

6. Vorrichtung (10) zum Lesen von Artikelinformationen nach Anspruch 5, wobei,
wenn der Beleuchtungsstatus des Beleuchtungsabschnitts (13)
der zweite Beleuchtungsstatus oder der dritte Beleuchtungsstatus ist,
unter der Bedingung, dass der Kundenerfassungsabschnitt (154) bestimmt hat, dass sich der Kunde der Vorrichtung (10) zum Lesen von Artikelinformationen nähert, die Lesesteuereinheit (155) den Betrieb des Lesegeräts (153) startet und die Beleuchtungssteuereinheit (152) den Beleuchtungsstatus des Beleuchtungsabschnitts (13) zu dem ersten Beleuchtungsstatus ändert.

7. Vorrichtung (10) zum Lesen von Artikelinformationen
nach Anspruch 5 oder 6, wobei
wenn der Beleuchtungsstatus des Beleuchtungsabschnitts (13)
der dritte Beleuchtungsstatus ist,
die Beleuchtungssteuereinheit (152) den Beleuchtungsstatus des Beleuchtungsabschnitts (13) zu dem zweiten Beleuchtungsstatus ändert, unter der Bedingung, dass die Helligkeit des durch den Bildgebungsabschnitt (11) aufgenommenen Bildes für eine dritte vorbestimmte Zeit kleiner als ein zweiter vorbestimmter Wert ist.

8. Selbstbedienungskasse, umfassend:
einen Beladeständer zum Aufnehmen von Artikeln;
einen Zahlungsabwicklungsabschnitt; und
eine Vorrichtung (10) zum Lesen von Artikelinformationen nach einem der Ansprüche 1 bis 7.

9. Verfahren zum Lesen von Artikelinformationen, durchgeführt durch eine Vorrichtung (10) zum Lesen von Artikelinformationen, umfassend: Lesen, durch ein Lesegerät (153) der Vorrichtung, eines an einem Artikel angebrachten Codesymbols aus einem Bild, das von einem Bildgebungsabschnitt (11) aufgenommen wurde;
**gekennzeichnet, durch** weiter umfassend die Schritte von: Durchführen, durch einen Kundenerfassungsabschnitt (154) der Vorrichtung (10) zum Lesen von Artikelinformationen, einer Kundenerfassungsverarbeitung, um zu bestimmen, ob sich ein Kunde der Vorrichtung (10) zum Lesen von Artikelinformationen nähert,
wobei das Durchführen der Kundenerfassungsverarbeitung einschließt:
Aufnehmen, durch den Bildgebungsabschnitt (11), eines ersten Bildes und nach einem Zeitintervall (Δt)
eines zweiten Bildes,
Aufteilen jedes der erfassten Bilder in eine Vielzahl von Blöcken,
Berechnen einer durchschnittlichen Pixelhelligkeit einer Vielzahl von Pixeln, die zu jedem der Vielzahl von Blöcken gehören, und Setzen des berechneten Durchschnitts als eine Helligkeit des entsprechenden Blocks,
Erzeugen eines Differenzbildes nach dem Zeitintervall (Δt) durch Subtrahieren der Helligkeit jedes Blocks des ersten Bildes von der Helligkeit jedes Blocks des zweiten Bildes, Binarisieren des Ergebnisses mit einem vorbestimmten Schwellenwert und Setzen des entsprechenden Blocks des Differenzbildes entsprechend dem Ergebnis der Binarisierung auf "Eins" oder "Null", und,
wenn es eine vorbestimmte Anzahl oder mehr von den Blöcken gibt, die in dem Differenzbild auf "eins" gesetzt sind, Bestimmen, dass sich der Kunde der Vorrichtung (10) zum Lesen von Artikelinformationen nähert, Starten, durch eine Lesesteuereinheit (155) der Vorrichtung (10) zum Lesen von Artikelinformationen, den Betrieb des Lesegeräts (153) unter der Bedingung, dass der Kundenerfassungsabschnitt (154) bestimmt hat, dass sich der Kunde der Vorrichtung (10) zum Lesen von Artikelinformationen nähert.

10. Verfahren nach Anspruch 9, weiter umfassend:
Steuern, durch eine Beleuchtungssteuereinheit (152) der Vorrichtung (10) zum Lesen von Artikelinformationen, basierend auf einem Betriebsstatus des Lesens und einem Betriebsstatus des Kundenerfassungsabschnitts, der Helligkeit eines Beleuchtungsabschnitts (13), der
einen Bildgebungsbereich des Bildgebungsabschnitts (11) beleuchtet.

11. Verfahren nach Anspruch 10, weiter umfassend:
unter der Bedingung, dass das Lesen das Codesymbol für eine erste vorbestimmte Zeit nicht liest, Beenden des Lesens, und
Ändern eines Beleuchtungsstatus des Beleuchtungsabschnitts (13) von einem ersten Beleuchtungsstatus, in dem der Beleuchtungsabschnitt Licht bei maximaler Helligkeit emittiert, zu einem zweiten Beleuchtungsstatus, in dem die Helligkeit des Beleuchtungsabschnitts (13) reduziert ist.

## Revendications

1. Appareil (10) de lecture d'informations d'articles, comprenant :
un lecteur (153) configuré pour lire, à partir d'une image capturée par une section (11) d'imagerie, un symbole de code attaché à un article ;
**caractérisé en ce qu'**il comprend en outre :
une section (154) de détection de client configurée pour effectuer un traitement de détection de client pour déterminer si un client s'approche de l'appareil (10) de lecture d'informations d'articles,
dans lequel le traitement de détection de client inclut :
la capture, par la section (11) d'imagerie, d'une première image et, après un intervalle de temps (Δt), d'une seconde image (I2),
la division de chacune des images capturées en une pluralité de blocs,
le calcul d'une luminosité moyenne de pixels d'une pluralité de pixels appartenant à chacun de la pluralité de blocs et l'établissement de la moyenne calculée en tant que luminosité du bloc correspondant,
la génération, après l'intervalle de temps (Δt), d'une image différentielle en déduisant de la luminosité de chaque bloc de la première image la luminosité de chaque bloc de la seconde image, la binarisation du résultat avec un seuil prédéterminé et l'établissement du bloc correspondant de l'image différentielle à « un » ou « zéro » en fonction du résultat de la binarisation, et
s'il y a un nombre prédéterminé ou plus de blocs établis à « un » dans l'image différentielle, la détermination que le client s'approche de l'appareil (10) de lecture d'informations d'articles, et
un dispositif de commande de lecture (155) configuré pour démarrer le fonctionnement du lecteur (153) à condition que la section (154) de détection de client ait déterminé que le client s'approche de l'appareil (10) de lecture d'informations d'articles.

2. Appareil (10) de lecture d'informations d'articles selon la revendication 1, comprenant en outre un dispositif de commande d'éclairage (152) configuré pour commander, sur la base d'un état de fonctionnement du lecteur (153) et d'un état de fonctionnement de la section (154) de détection de client, la luminosité d'une section (13) d'éclairage qui éclaire une plage d'imagerie de la section (11) d'imagerie.

3. Appareil (10) de lecture d'informations d'articles selon la revendication 2, dans lequel
à condition que le lecteur (153) ne lise pas le symbole de code pendant un premier temps prédéterminé,
le dispositif de commande de lecture (155) met fin au fonctionnement du lecteur (153), et
le dispositif de commande d'éclairage (152) change l'état d'éclairage de la section (13) d'éclairage d'un premier état d'éclairage, dans lequel la section (13) d'éclairage émet de la lumière à une luminosité maximale, en un deuxième état d'éclairage, dans lequel la luminosité de la section (13) d'éclairage est réduite.

4. Appareil (10) de lecture d'informations d'articles selon la revendication 2 ou la revendication 3, dans lequel la section (13) d'éclairage comprend une diode électroluminescente.

5. Appareil (10) de lecture d'informations d'articles selon la revendication 3 ou la revendication 4, dans lequel, après le changement de l'état d'éclairage de la section (13) d'éclairage en le deuxième état d'éclairage,
le dispositif de commande d'éclairage (152) change, à condition que la luminosité de l'image capturée par la section (11) d'imagerie soit égale ou supérieure à une première valeur prédéterminée pendant un deuxième temps prédéterminé, l'état d'éclairage de la section (13) d'éclairage en un troisième état d'éclairage, dans lequel la section (13) d'éclairage est éteinte.

6. Appareil (10) de lecture d'informations d'articles selon la revendication 5, dans lequel,
si l'état d'éclairage de la section (13) d'éclairage est le deuxième état d'éclairage ou le troisième état d'éclairage, à condition que la section (154) de détection de client ait déterminé que le client s'approche de l'appareil (10) de lecture d'informations d'articles, le dispositif de commande de lecture (155) démarre le fonctionnement du lecteur (153), et le dispositif de commande d'éclairage (152) change l'état d'éclairage de la section (13) d'éclairage en le premier état d'éclairage.

7. Appareil (10) de lecture d'informations d'articles selon la revendication 5 ou la revendication 6, dans lequel
si l'état d'éclairage de la section (13) d'éclairage est le troisième état d'éclairage,
le dispositif de commande d'éclairage (152) change l'état d'éclairage de la section (13) d'éclairage en le deuxième état d'éclairage à condition que la luminosité de l'image capturée par la section (11) d'imagerie soit inférieure à une seconde valeur prédéterminée pendant un troisième temps prédéterminé.

8. Terminal de caisse automatique, comprenant :
un support de chargement pour accueillir des articles ;
une section de traitement de paiement ; et
un appareil (10) de lecture d'informations d'articles selon l'une des revendications 1 à 7.

9. Procédé de lecture d'informations d'articles réalisé par un appareil (10) de lecture d'informations d'articles, comprenant : la lecture, par un lecteur (153) de l'appareil, à partir d'une image capturée par une section (11) d'imagerie, d'un symbole de code attaché à un article ;
**caractérisé en ce qu'**il comprend en outre les étapes suivantes : la réalisation, par une section (154) de détection de client de l'appareil (10) de lecture d'informations d'articles, d'un traitement de détection de client pour déterminer si un client s'approche de l'appareil (10) de lecture d'informations d'articles,
dans lequel la réalisation du traitement de détection de client inclut :
la capture, par la section (11) d'imagerie, d'une première image et, après un intervalle de temps (Δt), d'une seconde image,
la division de chacune des images capturées en une pluralité de blocs,
le calcul d'une luminosité moyenne de pixels d'une pluralité de pixels appartenant à chacun de la pluralité de blocs et l'établissement de la moyenne calculée en tant que luminosité du bloc correspondant,
la génération, après l'intervalle de temps (Δt), d'une image différentielle en déduisant de la luminosité de chaque bloc de la première image la luminosité de chaque bloc de la seconde image, la binarisation du résultat avec un seuil prédéterminé et l'établissement du bloc correspondant de l'image différentielle à « un » ou « zéro » en fonction du résultat de la binarisation, et
s'il y a un nombre prédéterminé ou plus de blocs établis à « un » dans l'image différentielle, la détermination que le client s'approche de l'appareil (10) de lecture d'informations d'articles, le démarrage, par un dispositif de commande de lecture (155) de l'appareil (10) de lecture d'informations d'articles, du fonctionnement du lecteur (153) à condition que la section (154) de détection de client ait déterminé que le client s'approche de l'appareil (10) de lecture d'informations d'articles.

10. Procédé selon la revendication 9, comprenant en outre :
la commande, par un dispositif de commande d'éclairage (152) de l'appareil (10) de lecture d'informations articles, sur la base d'un état de fonctionnement de la lecture et d'un état de fonctionnement de la section de détection de client, de la luminosité d'une section (13) d'éclairage qui éclaire une plage d'imagerie de la section (11) d'imagerie.

11. Procédé selon la revendication 10, comprenant en outre :
à condition que la lecture ne lise pas le symbole de code pendant un premier temps prédéterminé, l'arrêt de la lecture, et
le changement d'un état d'éclairage de la section (13) d'éclairage d'un premier état d'éclairage, dans lequel la section d'éclairage émet de la lumière à une luminosité maximale, en un deuxième état d'éclairage, dans lequel la luminosité de la section (13) d'éclairage est réduite.
